# EUROPÄISCHE PATENTANMELDUNG

(11) **EP 2 898 972 A1**
(43) Veröffentlichungstag der Anmeldung: **29.07.2015**
(21) Anmeldenummer: 15157608.9
(22) Anmeldetag: 25.05.2007
(51) Int. Cl.: B23G 1/16, B23G 1/32, B23G 5/06, B23G 5/18, B23G 7/00

(54) **Verfahren zur Erzeugung eines Gewindes in wenigstens zwei Arbeitsschritten**

(30) Priorität: 08.06.2006 DE 102006026992
(62) Teilanmeldung aus: 07010459.1
(71) Anmelder: EMUGE-Werk Richard Glimpel GmbH & Co.KG Fabrik für Präzisionswerkzeuge, 91207 Lauf a.d. Pegnitz (DE)
(72) Erfinder: Glimpel, Helmut, 91207 Lauf a. d. Pegnitz (DE); Hechtle, Dietmar, 91257 Pegnitz (DE)
(74) Vertreter: Schröer, Gernot H.

(57) **Zusammenfassung**

Gemäß der Erfindung werden zur Erzeugung eines Gewindes in einem Werkstück in wenigstens einem ersten Arbeitsschritt in dem Werkstück (50) durch Abtragen von Material des Werkstücks ein Vorgewinde erzeugt, dessen Vorgewindeprofil (1) zwei Vorgewindeflanken (1A, 1B) und einen die beiden Vorgewindeflanken verbindenden Vorgewindegrund (1C) aufweist, in wenigstens einem zweiten Arbeitsschritt durch plastisches Eindrücken des Materials des Werkstücks wenigstens in einem Teilbereich wenigstens einer der beiden Vorgewindeflanken (1A, 1B) um ein vorgegebenes oder vorgebbares Eindrückvolumen (ΔVA, ΔVB) ein Endgewinde mit einem Endgewindeprofil (3) erzeugt, wobei, bezogen auf eine gleiche Profillänge des Vorgewindeprofils (1), das Eindrückvolumen (ΔVC) am Vorgewindegrund (1C) kleiner ist als das Eindrückvolumen (ΔVA, ΔVB) an der oder den Vorgewindeflanke(n) (1A, 1B).

## Beschreibung

Die Erfindung betrifft ein Verfahren zur Erzeugung eines Gewindes in wenigstens zwei Arbeitsschritten.

Zur Gewindeerzeugung oder Gewindenachbearbeitung sind ausschließlich spanabhebend, ausschließlich spanlos und sowohl spanabhebend als auch spanlos arbeitende Verfahren und Gewindewerkzeuge bekannt. Spanabhebende Gewindeerzeugung beruht auf Abtrag des Materials des Werkstücks im Bereich des Gewindeganges (oder: Gewindeprofils). Spanlose Gewindeerzeugung beruht auf einer Erzeugung des Gewindeganges in dem Werkstück durch Druck und die dadurch bewirkte Umformung oder plastische Verformung des Werkstücks. Ein Vorteil der spanlosen Gewindeerzeugung im Vergleich zu spanabhebender Gewindeerzeugung ist, dass durch die Verfestigung oder Verdichtung an der Oberfläche die Härte des Werkstoffs im Bereich des Gewindeprofils ansteigt und somit ein verschleißfesteres Gewinde erzeugt werden kann.

Unter die spanabhebenden oder spanenden Gewindeerzeugung fallen die Gewindebohrer (vgl. Handbuch der Gewindetechnik und Frästechnik, Herausgeber: EMUGE-FRANKEN, Verlag: Publicis Corporate Publishing, Erscheinungsjahr: 2004 (ISBN 3-89578-232-7*),* im Folgenden nur als "EMUGE-Handbuch" bezeichnet, Kapitel 8, Seiten 181 bis 298) und die Gewindefräser (vgl. EMUGE-Handbuch, Kapitel 10, Seiten 325 bis 372).

Ein Gewindebohrer ist ein axial zu seiner Werkzeugachse arbeitendes Gewindeschneidwerkzeug, dessen Schneiden entlang eines Außengewindes mit der Gewindesteigung des zu erzeugenden Gewindes angeordnet sind. Beim Erzeugen des Gewindes wird der Gewindebohrer mit axialem Vorschub und unter Drehung um seine Werkzeugachse mit von der Vorschubgeschwindigkeit abhängiger Drehgeschwindigkeit in eine Bohrung des Werkstücks bewegt, wobei seine Schneiden permanent mit dem Werkstück an der Wandung der Bohrung in Eingriff sind (kontinuierlicher Schnitt).

Beim Gewindefräser sind mehrere Fräszähne mit Frässchneiden entlang des Werkzeugumfangs und/oder axial zur Werkzeugachse versetzt angeordnet. Zum Erzeugen des Gewindes wird der Gewindefräser um seine eigene Werkzeugachse rotiert und mit seiner Werkzeugachse in einer linearen Vorschubbewegung einerseits und zusätzlich einer Zirkularbewegung um eine Mittelachse des zu erzeugenden Gewindes oder der Vorbohrung im Werkstück andererseits bewegt, wodurch sich eine schraubenförmige Bewegung des Werkzeugs ergibt, deren Steigung der Gewindesteigung des zu erzeugenden Gewindes entspricht. Die Frässchneiden des Gewindefräsers greifen intermittierend nacheinander in das Werkstück ein (unterbrochener Schnitt).

Unter die spanlosen Gewindeerzeugungswerkzeuge fallen die sogenannten Gewindefurcher (vgl. EMUGE-Handbuch, Kapitel 9, Seiten 299 bis 324) sowie die sogenannten Zirkulargewindeformer.

Gewindefurcher weisen an einem Werkzeugschaft ein Außenprofil auf, das die Werkzeugachse spiral- oder schraubenförmig mit der Steigung des zu erzeugenden Gewindes umläuft und einen annähernd polygonalen Querschnitt aufweist. Die im Allgemeinen abgerundeten Polygon-Eckbereiche bilden Drückstollen oder Furchzähne oder Formkeile, die das Gewinde durch plastische Verformung und Fließen des Werkstückmaterials in die Zwischenräume zwischen dem Außenprofil einerseits und Verdichtung des Werkstückmaterials andererseits in das Werkstück eindrücken. Zur Erzeugung eines Innengewindes in einer bereits vorhandenen Bohrung wird der Gewindefurcher mit einer linearen Vorschubbewegung axial zur Werkzeugachse und unter Drehung des Werkzeugs um diese Werkzeugachse in die Bohrung eingeführt. Bekannte Ausführungsbeispiele solcher (axialen) Gewindefurcher finden sich auch in DE 101 36 293 A1*,* DE 199 58 827 A1, oder auch in DE 39 34 621 C2.

Aus WO 02/094491 A1 sind ein Zirkulargewindeformer und ein Zirkularformverfahren zur spanlosen Gewindeerzeugung bekannt. Dieser bekannte Zirkulargewindeformer ist langgestreckt und umfasst einen Arbeitsbereich mit einem oder mehreren durch Ringnuten voneinander getrennten ringförmigen Umfangsprofilen(en) mit jeweils wenigstens drei Drückstollen nach Art eines Polygons. Dieses Werkzeug wird in eine Bohrung mit größerem Durchmesser als das Werkzeug eingeführt und vollführt, neben einer Drehung um die eigene Werkzeugachse, eine schraubenförmigen Bewegung entlang der Bohrungswandung zur spanlosen Erzeugung des Gewindes in der Bohrung. Ein weiterer Zirkularformer und ein weiteres Zirkularformverfahren sind aus DE 103 18 203 A1 bekannt.

Schließlich sind auch kombinierte Verfahren mit wenigstens zwei Arbeitsschritten zum Erzeugen von Innengewinden bekannt, bei denen in einem Arbeitsschritt ein Vorgewinde erzeugt wird und in einem weiteren Arbeitsschritt aus dem Vorgewinde das Innengewinde durch Formen fertiggestellt wird. Durch dieses zwei- oder mehrstufige Verfahren muss nicht das gesamte Volumen des Gewindeprofils von einem einzigen Formwerkzeug durch plastisches Verformen des Materials erzeugt werden und die Belastung und der Verschleiß des Formwerkzeuges werden reduziert.

Für ein solches kombiniertes Verfahren mit mehreren Arbeitsschritten kann in einer ersten Variante in jedem Arbeitsschritt ein gesondertes Werkzeug verwendet werden. Aus DE 10 2004 033 772 A1 ist ein solches Verfahren bekannt, bei dem in einem ersten Arbeitsschritt im Werkstück ein Vorgewinde spanend oder spanlos vorerzeugt wird mittels eines Gewindebohrers, Gewindefräsers, durch Drehen, Schleifen oder Wickeln oder auch mittels eines Gewindefurchers und in einem zweiten Arbeitsschritt die Fertigerzeugung des Vorgewindes spanlos erfolgt unter Verwendung eines Gewindefurchers oder Zirkularformers, dessen Formkeile in den Gewindegrund des Vorgewindes eindrücken. Die Formkeile werden dabei durch Verbreiterungen ihrer Flanken im vorerzeugten Gewinde zentriert. Die Gewindeflanken des im ersten Arbeitsschritt erzeugten Vorgewindes bleiben im zweiten Arbeitsschritt unverändert, da die Verbreiterungen der Formkeilflanken nur an den Vorgewindeflanken zur Zentrierung anliegen, diese jedoch nicht verformen. Im zweiten Arbeitsschritt wird das Werkstückmaterial lediglich im Bereich des die beiden Gewindeflanken verbindenden Gewindegrundes des Vorgewindes weiter verformt. Dadurch werden im zweiten Arbeitsschritt der gesamte Gewindegrund und auch noch sich unmittelbar an den Gewindegrund anschließenden und in Verlängerung der Gewindeflanken des Vorgewinde liegenden Bereiche der Gewindeflanken des Endgewindes durch Formen fertiggestellt und sind dadurch zusätzlich verdichtet und verfestigt, während der überwiegende Bereich der Gewindeflanken des Endgewindes bereits im ersten Arbeitsschritt vollständig erzeugt wurde und im zweiten Arbeitsschritt nicht weiter bearbeitet wurde.

In einer zweiten bekannten Variante eines kombinierten Verfahrens mit mehreren Arbeitsschritten wird ein Kombinationswerkzeug mit einem spanabhebenden Gewindebohrteil und einem axial zur Werkzeugachse zum Gewindebohrteil versetzten spanlos arbeitenden Gewindefurchteil an einem Werkzeugschaft verwendet, wobei unter Drehung um die Werkzeugachse und axialem Vorschub in einem ersten Arbeitsschritt der Gewindebohrteil ein Vorgewinde in das Werkstück schneidet und in einem zweiten Arbeitsschritt der nachfolgende Gewindefurchteil das Vorgewinde in vorgegebener Weise zum endgültigen Gewinde umformt. Es schneidet also der Gewindebohrer das Gewinde vor und der Gewindefurcher furcht das vorgeschnittene Gewinde teilweise nach. Ein solches axiales Kombinationswerkzeug und Verfahren sind aus DE 70 17 590 U und DE 196 49 190 C2 bekannt.

Gemäß DE 196 49 190 C2 wird das Gewinde zunächst mit dem Gewindebohrer des Kombinationswerkzeuges in den Gewindeflanken profil- und maßgenau spanabhebend erzeugt und anschließend nur der Gewindegrund dieses vorgeschnittenen Gewindes mit dem unmittelbar nachfolgenden Gewindefurcher auf einen vorbestimmten Enddurchmesser spanlos verdichtet. Dadurch können vor allem die ersten Gewindegänge im Anschluss an einen Gewindeanschnitt schwingungsfester und weniger bruchgefährdet erzeugt werden. Im zweiten Arbeitschritt bleiben die beiden vom Gewindebohrer im ersten Arbeitsschritt geschnittenen Gewindeflanken vollständig unverändert.

Aus DE 70 17 590 U1 ist ein Kombinationswerkzeug zum Herstellen von Innengewinden bekannt mit einem als Vor- bzw. Mittelschneider ausgebildeten Gewindeschneidbohrer als vorderes Werkzeugteil zum Vorschneiden des Gewindes und einem sich in Arbeitsrichtung anschließenden Gewindefurcher als hinteres Werkzeugteil zum Fertigbearbeiten des Gewindes.

Die DE 10 2005 022 503 A1 offenbart ein weiteres Kombinationswerkzeug mit einem spanabhebenden Bereich mit Stirnschneiden und Umfangsschneiden und einem spanabhebenden Gewindevorschneidbereich mit Vorschneidzähnen zum Vorschneiden des Gewindes und einem anschließenden Gewindeformbereich mit Formkeilen zum spanlosen Fertigformen des Gewindes (Fig. 40).

Der Erfindung liegt nun die Aufgabe zugrunde, ein neues Verfahren zur Erzeugung eines Gewindes in wenigstens zwei Arbeitsschritten anzugeben.

Diese Aufgabe wird gemäß der Erfindung gelöst mit den Merkmalen des Patentanspruchs 1. Vorteilhafte Ausgestaltungen und Weiterbildungen ergeben sich aus den abhängigen Patentansprüchen.

Das Verfahren zum Erzeugen eines Gewindes in einem Werkstück gemäß Patentanspruch 1 umfasst die folgenden Verfahrensschritte:
a) Erzeugen eines Vorgewindes mit einem Vorgewindeprofil mit zwei Vorgewindeflanken und einem die beiden Vorgewindeflanken verbindenden Vorgewindegrund in dem Werkstück durch Abtragen von Material des Werkstücks (oder: durch spanabhebende oder spanende Bearbeitung) in wenigstens einem ersten Arbeitsschritt (oder: Prozessschritt)
b) Erzeugen eines Endgewindes durch plastisches Eindrücken (oder: spanloses Formen oder Umformen) des Materials des Werkstücks wenigstens in einem Teilbereich der Vorgewindeflanken und im Vorgewindegrund um jeweils ein vorgegebenes oder vorgebbares Eindrückvolumen in wenigstens einem zweiten Arbeitsschritt,
c) wobei die Eindrückvolumina an den Flanken und dem Gewindegrund, bezogen auf die gleiche Profillänge, unterschiedlich gewählt werden, nämlich kleiner am Vorgewindegrund als an der oder den Vorgewindeflanke(n).

Es wird also in wenigstens zwei Arbeitsschritten zunächst ein Vorgewinde in dem Werkstück spanabhebend oder durch Materialabtrag erzeugt und dann ohne Materialabtrag, sondern nur durch plastisches Eindrücken eines Gewindeformbereichs oder -Werkzeugs und die dadurch bewirkte bleibende Verformung des Werkstückmaterials das Vorgewinde nachbearbeitet und in ein Endgewinde weitergeformt. Es wird also, mit anderen Worten, beim plastischen Eindrücken zum Erzeugen des Endgewindes im zweiten Arbeitsschritt ein so hoher Druck auf die Werkstückoberfläche ausgeübt, dass sich, über eine rein elastische Verformung hinaus, eine gezielte plastische Umformung des Werkstückmaterials im Gewindebereich ergibt, die wiederum zu einer Volumenvergrößerung im Endgewindeprofil gegenüber dem Vorgewindeprofil führt. Das plastische Eindrücken oder Umformen bewirkt eine Verfestigung des Gefüges im Werkstückmaterial an den betroffenen Gewindeprofilbereiche und in der Regel auch ein Fließen des Werkstückmaterials, wenn der ausgeübte Druck oberhalb der Fließgrenze des Werkstückmaterials liegt. Sowohl die Verfestigungsvorgänge als auch die Fließvorgänge führen für sich oder in Kombination zu der angestrebten Volumenverkleinerung des Werkstückmaterials und der komplementären Volumenvergrößerung des Gewindeprofils.

Die Erfindung beruht nun auf der Überlegung, beim Nachformen des Vorgewindes auch an den Gewindeflanken des Vorgewindes das dort befindliche Material des Werkstücks um ein vorgegebenes oder vorgebbares Eindrückvolumen plastisch oder bleibend einzudrücken (oder: einzuformen, umzuformen).

Durch diese Kombination spanabhebender und umformender Fertigungsschritte können insbesondere
- Gewinde auch in schlecht fließenden oder umformbaren Werkstoffen, wie z.B. Grauguss, (teilweise oder in der Endbearbeitung) formend erzeugt werden,
- die Prozesskräfte reduziert werden,
- auch Gewinde mit großen Gewindesteigungen, insbesondere bis 6 mm, und/oder großen Bearbeitungsquerschnitten (in der Endbearbeitung) umformend erzeugt werden,
- eine sogenannte Krallenbildung trotz der umformenden Endbearbeitung vermieden oder reduziert werden und damit der Mutterkern oder Kerndurchmesser in engen Toleranzen gehalten werden,
- eine Verfestigung und Erhöhung der Dauerfestigkeit und dynamischen Festigkeit der Gewinde, zumindest von deren endgeformten Gewindeflankenbereichen erreicht werden,
- eine Glättung von Gewindeoberflächen, zumindest an den umgeformten Flankenbereichen, erzielt werden.

Das Eindrückvolumen an den Vorgewindeflanken wird dabei vorzugsweise durch die Anpassung eines Gewindeformprofils oder eines Wirkprofils des Gewindeformbereichs an das vorab erzeugte Vorgewindeprofil festgelegt und ergibt sich insbesondere als Differenzvolumen der jeweiligen Abmessungen von Vorgewindeprofil und Gewindeformprofil an den Vorgewindeflanken abzüglich eines eventuellen und in der Regel relativ kleinen Rückstellvolumens aufgrund elastischer Rückstellung des Werkstückmaterials.

Auch das Endgewinde weist in der Regel ein Endgewindeprofil mit zwei Endgewindeflanken und einem die beiden Endgewindeflanken verbindenden Endgewindegrund auf. Die Endgewindeflanken des Endgewindeprofils reichen wenigstens abschnittsweise weiter in das Werkstückmaterial als zuvor die Vorgewindeflanken oder das Endgewindeprofil ist zumindest in einem Teilbereich der Gewindeflanken um das beim Einformen verdrängte Volumen größer als das Vorgewindeprofil.

Ein Gewindeprofil, sei es das Vorgewindeprofil, das Gewindeformprofil oder das Endgewindeprofil, ist dabei in der üblichen Weise als Kontur eines Querschnitts des Gewindeganges in einer die Gewindemittelachse oder Werkzeug(dreh)achse enthaltenden Schnittebene oder in einem Längsschnitt durch den Gewindegang definiert.

Es kann in einer Ausführungsform nur in wenigstens einem Teilflankenbereich, insbesondere weiter innen liegenden Teilflankenbereichen, der Vorgewindeflanke(n) das Vorgewinde nachgeformt werden oder das Endgewindeprofil nur in Teilflankenbereich(en) der Endgewindeflanke(n) geformt sein, insbesondere in einem inneren Teilflankenbereich, und in dem oder den übrigen Teil(flanken)bereich(en) ausschließlich geschnitten oder spanabhebend bearbeitet werden bzw. sein.

In einer anderen Ausführungsform werden die Vorgewindeflanken vollständig oder über ihre gesamte Profillänge weiter eingedrückt und entsprechend die Endgewindeflanken vollständig nachgeformt.

Außerdem können die Eindrückvolumina auch an unterschiedlichen Flanken oder unterschiedlichen Flankenbereichen unterschiedlich gewählt werden, beispielsweise durch Verschiebung von Vorgewindeprofil und Gewindeformprofil zueinander, insbesondere in Richtung der oder axial zur Gewindemittelachse.

Das Vorgewindeprofil und das Gewindeformprofil kann durch ein einziges Profil oder auch eine Überlagerung mehrerer einzelner Profile als resultierendes Wirkprofil erzeugt oder dargestellt werden.

Vorzugsweise wird eine Vorrichtung zur Erzeugung von Gewinden in Werkstücken verwendet, die Folgendes umfasst:
a) wenigstens einen Vorgewindeerzeugungsbereich zum spanabhebenden Erzeugen eines Vorgewindes, dessen Vorgewindeprofil zwei Vorgewindeflanken und einen die beiden Vorgewindeflanken verbindenden Vorgewindegrund aufweist,
   und
b) wenigstens einen Gewindeformbereich zum Nachformen des Vorgewindes durch plastisches Eindrücken des Materials des Werkstücks wenigstens in einem Teilbereich der Vorgewindeflanken um ein vorgegebenes oder vorgebbares Eindrückvolumen.

Ferner können das Erzeugen des Vorgewindeprofils und das Weiterformen des Vorgewindeprofils in das Endgewindeprofil in den beiden Arbeitsschritten mit unterschiedlichen Werkzeugen oder auch mit einem gemeinsamen Kombinationswerkzeug erfolgen.

Das oder die Werkzeuge oder der oder die Werkzeugbereich(e) zum Erzeugen des Vorgewindes in dem ersten Arbeitsschritt kann bzw. können insbesondere einen Gewindebohrbereich und/oder einen Gewindefräsbereich und das oder die Werkzeuge oder der oder die Werkzeugbereich(e) zum Fertigformen des Endgewindes in dem zweiten Arbeitsschritt kann bzw. können einen Gewindefurchbereich und/oder einen Zirkulargewindeformbereich als Gewindeformbereich umfassen.

Alternativ können auch beide Arbeitsschritte mit einem Kombinationswerkzeug durchgeführt werden, das einen Vorgewindeerzeugungsbereich und einen Gewindeformbereich aufweist, die zeitlich nacheinander in das Werkstück eingreifen.

Zum Einführen oder Einfädeln des nachfolgenden Gewindeformbereichs kann dieser einen Einführbereich oder ein Einführungsgewinde aufweisen mit einem dem Vorgewindeprofil angepassten Profil und/oder kann ein weicher Druckausgleich oder eine Minusprogrammierung bei Zugausgleich im Werkzeugspannmittel vorgesehen sein.

Ferner kann ein definierter Gewindeanfang des Vorgewindes im Werkstück und ein exaktes Einfädeln des nachfolgenden Gewindeformbereichs an diesem Gewindeanfang durch Drehpositionsbestimmung des oder der Werkzeuge(s) erzeugt werden.

Mit dem Verfahren und dem oder den Werkzeug(en) gemäß der Erfindung können zwei- oder mehrstufig alle gängigen Gewindetypen, einschließlich metrische Gewinde (z.B. nach DIN oder ISO), Rohrgewinde, US Unified Gewinde MJ-Gewinde, US UNJ-Gewinde, kegelige Gewinde, zylindrische Gewinde, Trapezgewinde, Rundgewinde, Sägengewinde, Whitworth-Gewinde und auch Sondergewinde wie Kugelumlaufgewinde oder Self-Lock-Gewinde hergestellt werden.

Die Erfindung wird nachfolgend anhand von Ausführungsbeispielen und unter Bezugnahme auf die beiliegenden Zeichnungen weiter erläutert. Es zeigen jeweils in einem Längsschnitt:
- FIG 1: eine erste Ausführungsform eines geschnittenen Vorgewindeprofils und eines Gewindenachformprofils in einem Längsschnitt,
- FIG 2: die Überlagerung der beiden Gewindeprofile gemäß FIG 1 und das daraus resultierende Endgewindeprofil,
- FIG 3: eine zweite Ausführungsform eines geschnittenen Vorgewindeprofils und eines Gewindenachformprofils in einem Längsschnitt,
- FIG 4: die Überlagerung der beiden Profile gemäß FIG 3 und das daraus resultierende Endgewindeprofil,
- FIG 5: eine dritte Ausführungsform eines geschnittenen Vorgewindeprofils und eines Gewindenachformprofils in einem Längsschnitt,
- FIG 6: die Überlagerung der beiden Profile gemäß FIG 5 und das daraus resultierende Endgewindeprofil,
- FIG 7: eine vierte Ausführungsform eines geschnittenen Vorgewindeprofils und eines Gewindenachformprofils in einem Längsschnitt,
- FIG 8: die Überlagerung der beiden Profile gemäß FIG 7 und das daraus resultierende Endgewindeprofil,
- FIG 9: eine fünfte Ausführungsform eines geschnittenen Vorgewindeprofils und eines Gewindenachformprofils in einem Längsschnitt,
- FIG 10: die Überlagerung der beiden Profile gemäß FIG 9 und das daraus resultierende Endgewindeprofil,
- FIG 11 bis 16: verschiedene Momentaufnahmen eines Arbeitsprozesses zur Erzeugung eines Vorgewindes mit einem Zirkulargewindefräser.

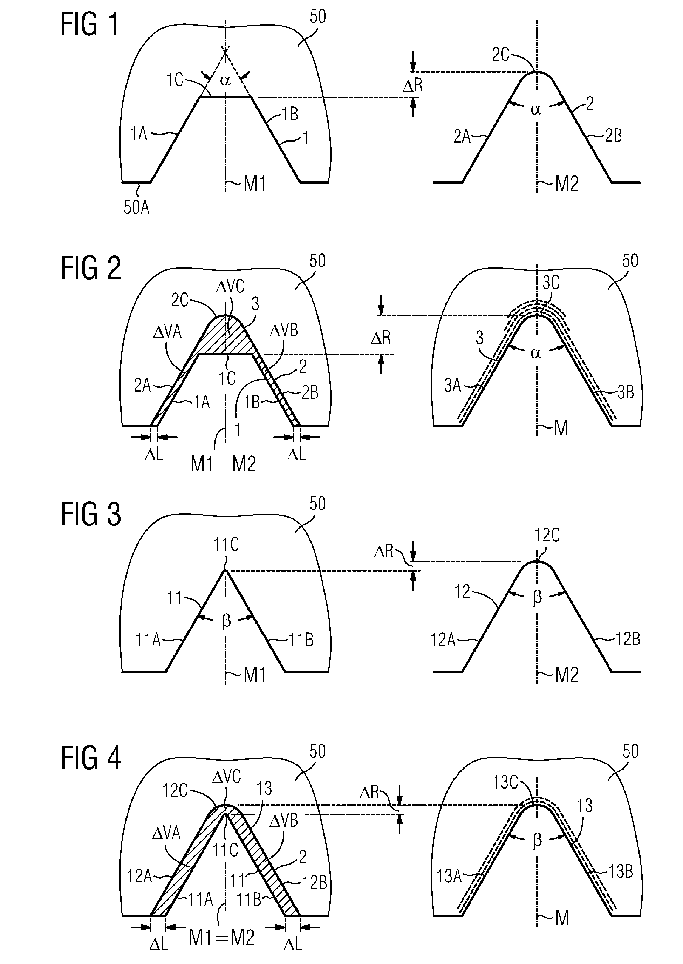

Einander entsprechende Teile und Größen sind in den FIG 1 bis 16 mit denselben Bezugszeichen versehen.

Die FIG 1 bis 10 zeigen verschiedene Verfahrensschritte gemäß der Erfindung, bei denen das Werkstück 50 an den Flanken eines Vorgewindes weiter umgeformt oder eingedrückt wird zum Herstellen des Endgewindes.

In FIG 1 ist auf der linken Seite ein in einem Werkstück 50 spanabhebend erzeugtes oder geschnittenes Vorgewindeprofil 1 als Innengewinde dargestellt, das einen trapezförmigen Querschnitt aufweist mit zwei unter einem Öffnungswinkel (oder: Scheitelwinkel, Zwischenwinkel) α zueinander geneigten Flanken 1A und 1B und einem die beiden Flanken 1A und 1B verbindenden geradlinigen Gewindegrund 1C, der vorzugsweise parallel zur Oberfläche 50A des Werkstücks 50, die insbesondere die Innenfläche der Kernbohrung ist, verläuft. Eine senkrecht zur nicht dargestellten Gewindemittelachse (oder: Gewindelängenrichtung) verlaufende Mittelachse des Vorgewindeprofils 1 ist mit M1 bezeichnet und bildet in dem Ausführungsbeispiel gemäß FIG 1 und 2 zugleich eine Symmetrieachse des Vorgewindeprofils 1. Das Vorgewindeprofil 1 wird vorzugsweise mit einem Gewindebohrer oder einem Gewindefräser oder auch einer Kombination beider Werkzeuge wie einem Zirkularbohrgewindefräser erzeugt und ergibt sich im Allgemeinen als effektives Profil oder Wirkprofil aus Überlagerung aller einzelnen Profile der hintereinander eingreifenden Schneiden des Werkzeugs.

Auf der rechten Seite der FIG 1 ist ein Gewindeformprofil 2 dargestellt, das sich als Wirkprofil oder überlagertes oder effektives Profil eines Gewindeformprozesses oder eines Gewindeformwerkzeuges ergibt. Bei einem Gewindeformwerkzeug mit mehreren Drückstollen oder Formzähnen entspricht das dargestellte Wirkprofil oder Gewindeformprofil 2 der Überlagerung aller einzelnen Profile der einzelnen Drückstollen oder Formzähne. Das Gewindeformprofil 2 weist zwei geradlinige oder lineare Flanken 2A und 2B auf, die nach innen in das Werkstück 50 den gleichen Öffnungswinkel α wie die Vorgewindeflanken 1A und 1B (beispielsweise etwa 60 °) zueinander einschließen, und einen Gewindegrundbereich 2C, der die beiden Flanken 2A und 2B verbindet und gerundet oder konvex gekrümmt ist, insbesondere kreisbogenförmig oder mit konstantem Krümmungsradius. Eine senkrecht zur nicht dargestellten Gewindemittelachse verlaufende Mittelachse des Gewindeformprofils 2 ist mit M2 bezeichnet und bildet in dem Ausführungsbeispiel gemäß FIG 1 und 2 zugleich eine Symmetrieachse des Gewindeformprofils 2. Bei dem Werkzeug ist der Gewindegrundbereich 2C der radial am weitesten außen liegende Außenbereich oder die Überlagerung der Zahnköpfe der Formzähne, bei dem komplementären, im Werkstück gebildeten Profil der Gewindegrund oder der tiefste Bereich im Werkstück. Der Gewindegrundbereich 2C des Gewindeformprofils 2 ist nun radial um eine radiale Differenz oder einen radialen Abstand ΔR weiter außen angeordnet oder weist eine entsprechende größere radiale Zustellung in das Werkstück auf als das Vorgewindeprofil 1.

In FIG 2 ist auf der linken Seite die Überlagerung des Vorgewindeprofils 1 und des Gewindeformprofils 2 dargestellt. Die beiden Mittelachsen M1 und M2 sind in Deckung oder Übereinstimmung gebracht. Dadurch verlaufen, auch aufgrund der gleichen Öffnungswinkel α, die Flanken 1A und 2A sowie 1B und 2B jeweils parallel zueinander und jede der Flanken 2A und 2B des Gewindeformprofils 2 liegt jeweils um dieselbe Differenz in der in Gewindelängenrichtung gemessenen Länge (oder: Längendifferenz) ΔL weiter außen als die zugehörige Flanke 1A und 1B des geschnittenen Vorgewindeprofils 1. Durch den auf den Vorschneidprozess, bei dem das Vorgewindeprofil 1 erzeugt wird, folgenden spanlosen Gewindeformprozess mittels des Gewindeformprofils 2 wird deshalb gemäß FIG 1 und 2 das Material des Werkstücks 50 am Vorgewindeprofil 1 in allen Richtungen weiter verdrängt. Dabei wird durch Kaltverformung und Fließen des Material sowie Verdichtung wird an beiden Flanken jeweils eine Volumendifferenz ΔVA zwischen der ursprünglichen Flanke 1A des Vorgewindeprofils 1 (Vorgewindeflanke) und der Flanke 2A des Gewindeformprofils 2 (Gewindeformflanke) und ΔVB zwischen der Vorgewindeflanke 1B und der Gewindeformflanke 2B weiter in das Werkstück 50 eingearbeitet. Die beiden Eindrückvolumina ΔVA und ΔVB sind durch die Längendifferenz ΔL der beiden Flanken 1A und 2A bzw. 1B und 2B bestimmt. Am Gewindegrund wird gemäß FIG 1 und 2 aufgrund der relativ großen radialen Differenz ΔR ein vergleichsweise großes Eindrückvolumen ΔVC weiter in das Werkstück 50 formend durch das Gewindeformprofil 2 und dessen Gewindegrund 2C eingearbeitet. Das Eindrückvolumen ΔVC liegt zwischen dem Gewindegrund 1C des Vorgewindes 1 und dem Gewindegrundbereich 2C des Gewindeformprofils 2.

Das durch diese beiden Arbeitsschritte entstandene fertige Endgewinde 3 ist auf der rechten Seite der FIG 2 dargestellt. Aufgrund der speziellen Gestaltung des Vorgewindes 1 und des Gewindeformprofils 2 in FIG 1 haben beiden Flanken 3A und 3B und der Gewindegrund 3C des Endgewindeprofils 3 die Form des Gewindeformprofils 2, das heißt das Gewindeformprofil 2 bildet sich vollständig in das Werkstück 50 ab, die Mittelachse M des Endgewindeprofils 3 entspricht der Mittelachse M2 des Gewindeformprofils 2 und das gesamte Endgewindeprofil 3 ist an seiner gesamten Oberfläche durch Formen und die dadurch bewirkte Volumenverdrängung von Werkstückmaterial erzeugt. Dadurch ist auch entlang des gesamten Endgewindeprofils 3 eine Verdichtung oder Verfestigung des Werkstückmaterials erreicht, die durch gestrichelte Linien angedeutet ist. Mehrere solcher Linien bedeuten, dass die Verdichtung stärker ist und sich tiefer erstreckt, was im vorliegenden Ausführungsbeispiel im Bereich des Gewindegrundes 3C und eines anschließenden Teilbereichs, der der radialen Differenz ΔR entspricht, der Flanken 3A und 3B der Fall ist.

Im zweiten Ausführungsbeispiel gemäß FIG 3 und 4 ist ein dreieckförmiges Vorgewindeprofil 11 mit zwei unter einem Öffnungswinkel β nach innen angeordneten Gewindeflanken 11A und 11B und einem an der Schnittlinie der beiden Gewindeflanken 11A und 11B liegenden im Wesentlichen eine Linie bildenden Gewindegrund 11C. Auf der rechten Seite ist ein Gewindeformprofil 12 dargestellt mit unter demselben Öffnungswinkel β zueinander gerichteten Flanken 12A und 12B und einem gerundeten Gewindegrundbereich 12C. Der Gewindegrund 11C des Vorgewindeprofils 11 ragt weiter in das Werkstück 50 hinein als beim Vorgewindeprofil 1 gemäß FIG 1, so dass der radiale Abstand ΔR zwischen dem Gewindegrundbereich 12C des Gewindeformprofils 12 und des Gewindegrundes 11C des Vorgewindeprofils 11 in FIG 3 deutlich kleiner ist als in FIG 1.

Dadurch ergibt sich, wie in der FIG 4, linke Seite dargestellt, bei der Überlagerung der beiden Gewindeprofile 11 und 12 bei zusammenfallenden Mittelachsen M1 des Vorgewindeprofils 11 und M2 des Gewindeformprofils 12 ein gegenüber FIG 2 deutlich verkleinertes Eindrückvolumen ΔVC im Gewindegrundbereich zwischen dem Gewindegrund 11C des Vorgewindeprofils 11 und 12C des Gewindeformprofils 12. An den Flanken jedoch ergibt sich aufgrund des gegenüber dem Vorgewindeprofil 1 in FIG 1 schmäleren Vorgewindeprofils 11 in FIG 3 und des dadurch bewirkten größeren Längenabstands ΔL zwischen den Flanken 11A und 12A bzw. 11B und 12B an beiden Flankenbereichen jeweils ein größeres Eindrückvolumen ΔVA und ΔVB bei dem Nachformen des Vorgewindeprofils 11 mittels des Gewindeformprofils 12. Die Eindrückvolumina ΔVA, ΔVB und ΔVC ergeben annähernd einen Bereich konstanter Dicke um das Vorgewindeprofil 11, so dass eine annähernd gleichmäßige Verdichtung über das gesamte Endgewindeprofil 13 erreicht wird, wie auf der rechten Seite der FIG 4 dargestellt. Auch in der Ausführungsform gemäß FIG 3 und 4 bildet sich das Gewindeformprofil 12 komplett auf das Endgewindeprofil 13 ab, sind also beide Gewindeflanken 13A und 13B sowie der Gewindegrundbereich 13C des Endgewindeprofils 13 vollständig beim Nachformen mit dem Gewindeformprofil 12 erzeugt oder nachbearbeitet worden.

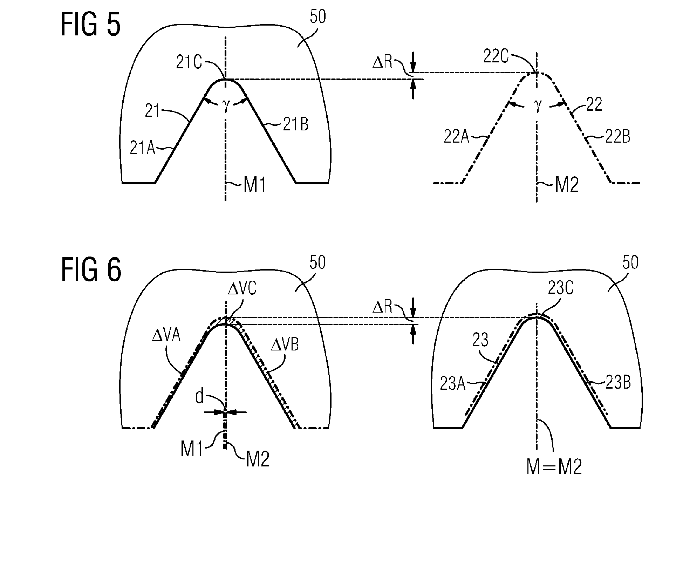

In dem Ausführungsbeispiel gemäß FIG 5 und 6 sind die Gewindeflanken 21A und 21B des Vorgewindeprofils 21 sowie die Flanken 22A und 22B des Gewindeformprofils 22 jeweils unter dem gleichen Öffnungswinkel γ zueinander gerichtet oder schließen diesen Winkel γ ein. Der Gewindegrund 21C des Vorgewindeprofils 21 und der Gewindegrundbereich 22C des Gewindeformprofils 22 sind beide konvex gekrümmt und abgerundet, insbesondere kreisförmig ausgebildet. Die Mittelachsen M1 und M2 bilden beide wieder jeweils Symmetrieachsen der zugehörigen Profile 21 bzw. 22.

Die Überlagerung von Vorgewindeprofil 21 und danach formend eingreifendem Gewindeformprofil 22 ist auf der linken Seite der FIG 6 dargestellt und das sich ergebende Endgewindeprofil 23 auf der rechten Seite der FIG 6. Im Unterschied zu FIG 1 bis 4 werden die beiden Mittelachsen M1 und M2 der Gewindeprofile 21 und 22 nicht in Deckung gebracht, sondern werden parallel zueinander unter einem Abstand d angeordnet. Durch diese seitliche Translation der Profile 21 und 22 bzw. ihrer Mittelachsen M1 und M2 zueinander ergibt sich nun trotz der symmetrischen Profile 21 und 22 ein unsymmetrisches Eindrückvolumen. Das Eindrückvolumen ΔVA zwischen der Vorgewindeflanke 21A und der Flanke 22A des Gewindeformprofils 22 ist um einen sich aus dem Abstand d der Mittelachsen M1 und M2 ergebenden Betrag kleiner als das Eindrückvolumen ΔVB zwischen der Vorgewindeflanke 21B und der Flanke 22B des Gewindeformprofils 22.

Der radiale Abstand ΔR zwischen Gewindegrundbereich 22C des Gewindeformprofils 22 und Gewindegrund 21C des Vorgewindeprofils 21 ist so gewählt, dass das am Gewindegrund 21C des Vorgewindes 21 eingedrückte Eindrückvolumen ΔVC bezogen auf die Eingriffslänge des Profils größer ist als die Eindrückvolumen ΔVA und ΔVB.

Auch gemäß FIG 6 bildet sich das Gewindeformprofil 22 vollständig in das Werkstück 50 ab und das gesamte Endgewindeprofil 3 ist durch Formen und die dadurch bewirkte Volumenverdrängung von Werkstückmaterial erzeugt.

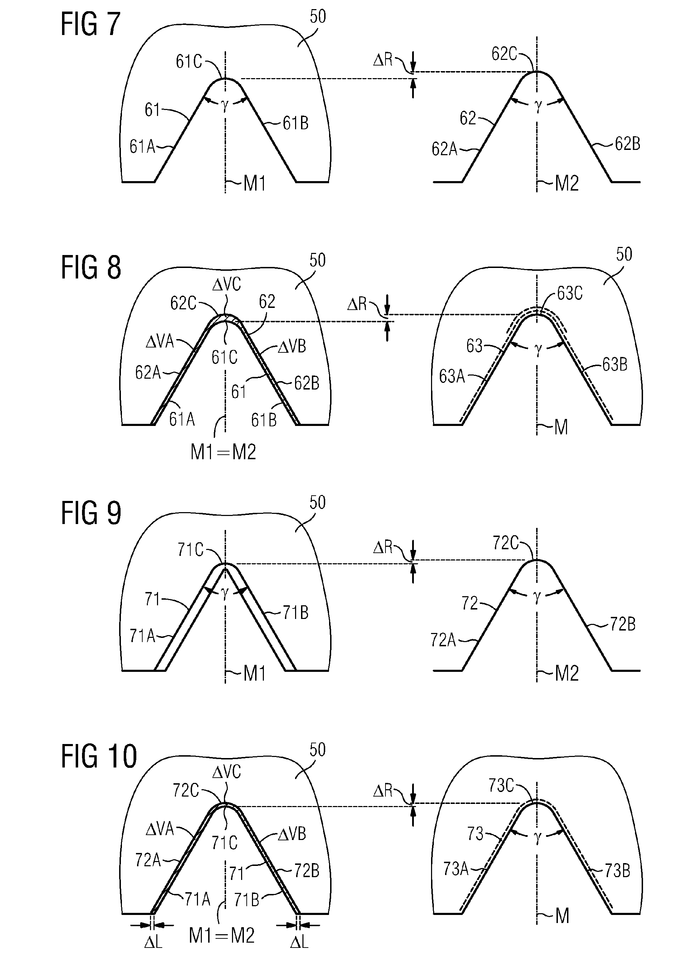

In dem Ausführungsbeispiel gemäß FIG 7 und 8 weisen sowohl das Vorgewindeprofil 61 als auch das Gewindeformprofil 62 jeweils zwei lineare oder geradlinige Flanken 61A und 61B bzw. 62A und 62B auf, die unter demselben Winkel γ zueinander geneigt sind und jeweils über einen Gewindegrund 61C und 62C miteinander verbunden sind. Das Gewindeformprofil 62 ist nun an allen Seiten größer ausgebildet als das Vorgewindeprofil 61 und verläuft im Wesentlichen parallel unter dem im Längsschnitt gemessenen Längenabstand ΔL der Flanken 62A und 61 A und 62B und 61B und dem etwas größer gewählten radialen Abstand ΔR. Die Mittelachsen M1 und M2 der Profile 61 und 62 fallen hier wieder zusammen. Dadurch entsteht ein über die Vorgewindeflanken 61A und 61B gleichmäßiges Eindrückvolumen ΔVA und ΔVB gleicher Breite in FIG 8 links und ein etwas größere Eindrückvolumen ΔVC und damit eine höhere Verdichtung am Gewindegrund 63C des Endgewindeprofils 63. Das Endgewindeprofil 63 gemäß FIG 8 rechts bildet sich vollständig aus dem Gewindeformprofil 62 ab, insbesondere ist also seine Mittelachse M gleich der Mittelachse M2 des Gewindeformprofils 62.

In dem Ausführungsbeispiel gemäß FIG 9 und FIG 10 ist im Unterschied zu dem Ausführungsbeispiel gemäß FIG 7 und FIG 8 lediglich der radiale Abstand ΔR kleiner gewählt und entspricht dem Längenabstand ΔL, so dass das Gewindeformprofil 73 im Wesentlichen in konstantem Abstand um das Vorgewindeprofil 61 verläuft und somit das Eindrückvolumen ΔVA, ΔVB und ΔVC und damit die Verfestigung im Wesentlichen gleichmäßig ist über das gesamte Gewindeprofil.

Die gekrümmten Gewindegrundbereiche sind vorzugsweise in allen Ausführungsformen bezogen auf den Innenraum oder den Gewindegang konvex und insbesondere kreisförmig oder elliptisch oder parabelförmig, gekrümmt.

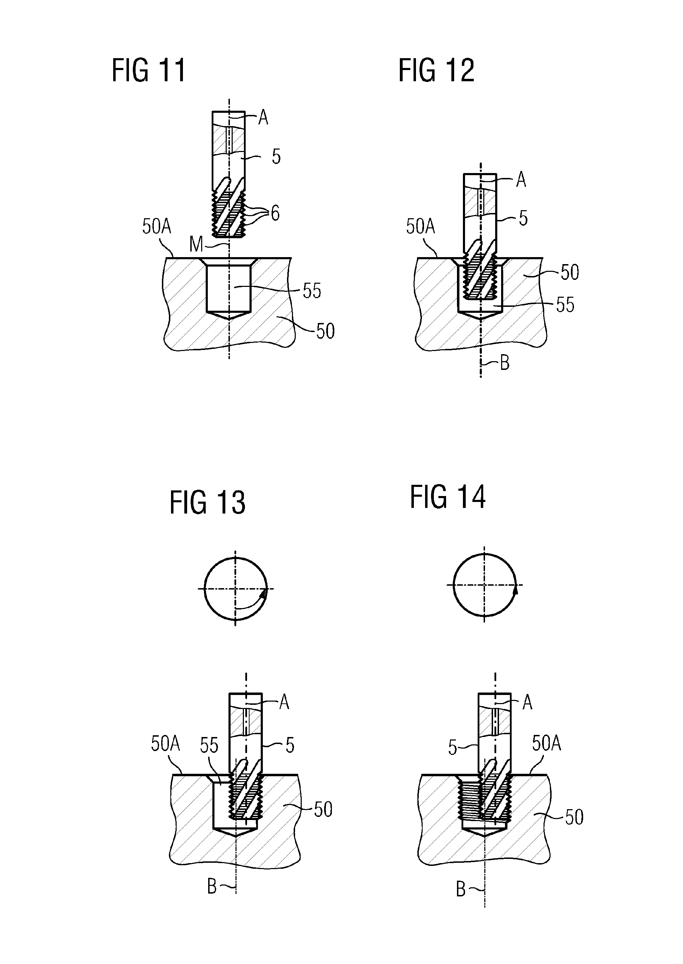

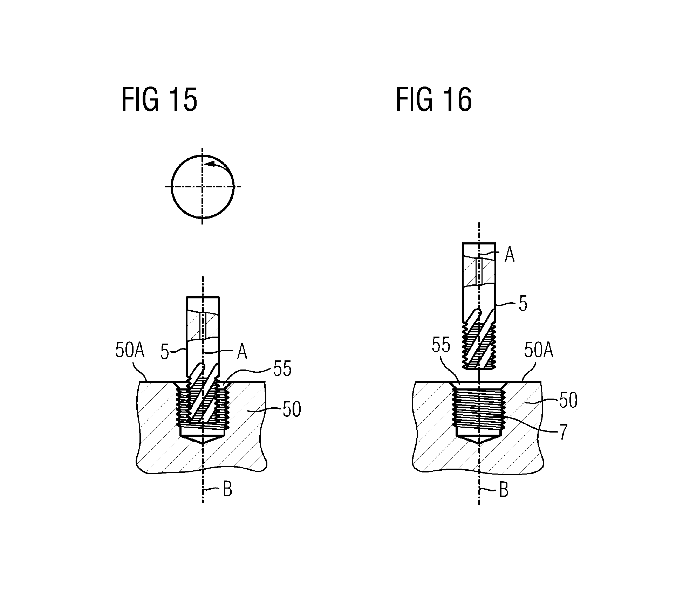

In den FIG 11 bis 16 ist eine Arbeitsbewegung mit einem als Gewindefräser ausgebildeten Werkzeug 5 mit Reihe von Gewindefräszähnen 6 zum Erzeugen des Vorgewindes gemäß der Erfindung dargestellt. Zunächst wird das Werkzeug 5 mit seiner Werkzeugachse A koaxial zu einer Mittelachse B einer Bohrung 55 im Werkstück 50 positioniert (FIG 11). Von dieser Ausgangsposition wird das Werkzeug 5 nun mit einer linearen Vorschubbewegung axial zur Werkzeugachse A und Mittelachse B in die Bohrung 55 im Werkstück 50 eingeführt, insbesondere auf die Gewindetiefe eingetaucht (FIG 12). Nun wird mit einem Einfahrradius oder einer Einfahrschleife das Werkzeug 5 gemäß FIG 13 zur Innenwand der Bohrung 55 radial zugestellt. Gemäß FIG 14 wird das Werkzeug 5 nun mit einer sich aus der Zahl der Gewindefräszähne 6 und der Zahl der gewünschten Gewindeumläufe andererseits ergebenden Zahl von Umläufen seiner Werkzeugachse A um die Mittelachse B in einer Zirkularbewegung bei gleichzeitiger Vorschubbewegung parallel zur Werkzeugachse A bewegt. Dadurch erzeugt das Werkzeug 5 in der Innenwand der Bohrung 55 ein Innengewinde als Vorgewinde 7 mit einer Steigung, die sich aus der Vorschubgeschwindigkeit und der Beabstandung der einzelnen Gewindefräszähne 6 des Werkzeugs 5 ergibt. Nach dieser schraubenförmigen Arbeitsbewegung gemäß FIG 14 wird nun gemäß FIG 15 das Werkzeug 5 wieder radial zur Mitte gestellt, so dass die Werkzeugachse A und die Mittelachse B wieder koaxial zueinander sind. Für diese Zurückfahrbewegung ist wieder ein Ausfahrradius vorgesehen. Gemäß FIG 16 wird in einer axialen Rückholbewegung, das Werkzeug 5 aus der Bohrung 55 axial zur Mittelachse B herausbewegt zurück in seine Ausgangsposition. Die Mittelachse B des erzeugten Vorgewindes 7 in der Bohrung 55 fällt mit der Mittelachse der Zirkularbewegung des Werkzeugs 20 während der Arbeitsbewegung in FIG 14 zusammen.

Im Anschluss an diese spanabhebende Erzeugung des Vorgewindes 7 wird nun in einem zweiten Arbeitschritt das Vorgewinde 7 zum Erzeugen des Endgewindes weiter ausgeformt. Die beiden Arbeitsschritte Vorgewindeerzeugung und Endgewindeerzeugung durch Nachformen des Vorgewindes können mit verschiedenen Werkzeugen für jeden Arbeitsschritt oder auch mit kombinierten Werkzeugen für zwei oder mehrere Arbeitsschritte durchgeführt werden. Der oder die spanabhebende Vorgewindeerzeugungsbereich(e) des oder der Werkzeuge(s) kann beispielsweise als Gewindebohrbereich, Gewindefräsbereich oder Bohrgewindefräsbereich oder
Schleif-, Dreh- oder Wickelbereich ausgebildet sein. Der oder die Endgewindeerzeugungsbereich(e) des oder der Werkzeug(e) umfassen das Gewindeformprofil als Wirkprofil und weisen vorzugsweise wenigstens einen Gewindefurchbereich oder wenigstens einen Zirkulargewindeformbereich auf.

Die Erfindung ist nicht auf die dargestellten und beschriebenen Ausführungen beschränkt, sondern kann in einer Vielzahl anderer Ausführungsformen verwirklicht werden. Beispielsweise müssen die Flanken der Gewindeprofile nicht linear oder geradlinig ausgebildet sein, sondern können auch gekrümmt verlaufen. Die Gewindeprofile müssen nicht symmetrisch zu einer Mittelachse sein, sondern können auch asymmetrisch zur Mittelachse ausgebildet sein. Die Nachformung des Vorgewindeprofils bei der Endgewindeerzeugung kann auch nur an den Vorgewindeflanken und nicht auch am Vorgewindegrund und/oder nur in Teilbereichen der Vorgewindeflanken und/oder nur an einer der beiden Vorgewindeflanken erfolgen.

### Bezugszeichenliste

- 1: Vorgewindeprofil
- 1A, 1B: Vorgewindeflanke
- 2: Gewindeformprofil
- 2A, 2B: Flanke
- 3: Endgewindeprofil
- 3A, 3B: Flanke
- 5: Werkzeug
- 6: Gewindefräszähnen
- 7: Vorgewinde
- 11: Vorgewindeprofil
- 11A, 11B: Vorgewindeflanke
- 12: Gewindeformprofil
- 12A, 12B: Flanke
- 13: Endgewindeprofil
- 13A, 13B: Flanke
- 21: Vorgewindeprofil
- 21A, 21B: Vorgewindeflanke
- 22: Gewindeformprofil
- 22A, 22B: Flanke
- 23: Endgewindeprofil
- 23A, 23B: Flanke
- 50: Werkstück
- 50A: Oberfläche
- 55: Bohrung

- A, B: Achse
- M1, M2, M: Mittelachse
- α, β, γ: Winkel
- ΔVA, ΔVB, ΔVC: Eindrückvolumen
- ΔR, d, ΔL: Abstand

## Patentansprüche

1. Verfahren zur Erzeugung eines Gewindes in einem Werkstück bei dem
a) in wenigstens einem ersten Arbeitsschritt in dem Werkstück (50) durch Abtragen von Material des Werkstücks ein Vorgewinde erzeugt wird oder wurde, dessen Vorgewindeprofil (1) zwei Vorgewindeflanken (1A, 1B) und einen die beiden Vorgewindeflanken verbindenden Vorgewindegrund (1C) aufweist,
b) in wenigstens einem zweiten Arbeitsschritt durch plastisches Eindrücken des Materials des Werkstücks wenigstens in einem Teilbereich wenigstens einer der beiden Vorgewindeflanken (1A, 1B) sowie im Vorgewindegrund (1C) um jeweils ein vorgegebenes oder vorgebbares Eindrückvolumen (ΔVA, ΔVB, ΔSC) ein Endgewinde erzeugt wird,
c) wobei, bezogen auf eine gleiche Profillänge des Vorgewindeprofils (1), das Eindrückvolumen (ΔVC) am Vorgewindegrund (1C) kleiner ist als das Eindrückvolumen (ΔVA, ΔVB) an der oder den Vorgewindeflanke(n) (1A, 1B).

2. Verfahren nach Anspruch 1, bei dem
in dem zweiten Arbeitsschritt das Material des Werkstücks im Wesentlichen über die gesamte(n) Vorgewindeflanke(n) um das vorgegebene oder vorgebbare Eindrückvolumen eingedrückt wird.

3. Verfahren nach Anspruch 1, bei dem
in dem zweiten Arbeitsschritt das Material des Werkstücks jeweils in wenigstens einem ersten Teilflankenbereich der Vorgewindeflanke(n) um das vorgegebene oder vorgebbare Eindrückvolumen eingedrückt wird und in wenigstens einem zweiten, sich an den ersten Teilflankenbereich anschließenden Teilflankenbereich die Vorgewindeflanke(n) im Wesentlichen unverändert bleibt oder bleiben.

4. Verfahren nach Anspruch 1, bei dem
ein Endgewinde mit einem Endgewindeprofil (3) mit zwei Endgewindeflanken (3A, 3B) und einem die beiden Endgewindeflanken verbindenden Endgewindegrund (3C) erzeugt wird, wobei vorzugsweise wenigstens eine Endgewindeflanke vollständig durch plastisches Eindrücken in dem zweiten Arbeitsschritt geformt wird
und/oder vorzugsweise
wenigstens eine Endgewindeflanke in wenigstens einem ersten Teilflankenbereich durch plastisches Eindrücken in dem zweiten Arbeitsschritt geformt wird und in einem zweiten, sich an den ersten Teilflankenbereich anschließenden Teilflankenbereich allein durch den Materialabtrag im ersten Arbeitsschritt erzeugt wird.

5. Verfahren nach einem der Ansprüche 1 bis 4, bei dem in dem zweiten Arbeitsschritt zum plastischen Eindrücken des Materials des Werkstücks ein Gewindeformprofil verwendet wird, das vorzugsweise zwei Flanken und einen die beiden Flanken verbindenden Grundbereich aufweist.

6. Verfahren nach einem der vorhergehenden Ansprüche, bei dem in dem ersten Arbeitsschritt ein Vorgewinde erzeugt wird, bei dem zumindest eine von dessen Vorgewindeflanken einen äußeren Teilflankenbereich und einen zwischen dem äußeren Teilflankenbereich und dem Vorgewindegrund sich erstreckenden inneren Teilflankenbereich aufweist.

7. Verfahren nach Anspruch 6, bei dem in dem zweiten Arbeitsschritt ein Endgewinde mit einem Endgewindeprofil erzeugt wird, bei dem
a) wenigstens eine von dessen Endgewindeflanken sich aus einem äußeren Teilflankenbereich des Vorgewindeprofils und einem inneren Teilflankenbereich des Gewindeformprofils darstellt oder zusammensetzt und/oder
b) wenigstens eine von dessen Endgewindeflanken sich aus einem äußeren Teilflankenbereich des Gewindeformprofils und einem inneren Teilflankenbereich des Vorgewindeprofils darstellt oder zusammensetzt.

8. Verfahren nach Anspruch 6 oder Anspruch 7, bei dem
a) in dem zweiten Arbeitsschritt zum plastischen Eindrücken des Materials des Werkstücks ein Gewindeformprofil verwendet wird, das zwei Flanken und einen die beiden Flanken verbindenden Grundbereich aufweist, wobei wenigstens eine dieser Flanken des Gewindeformprofils in einen äußeren Teilflankenbereich und einen inneren Teilflankenbereich unterteilt ist,
b) in dem zweiten Arbeitsschritt ein Endgewinde mit einem Endgewindeprofil erzeugt wird, bei dem
b1) wenigstens eine von dessen Endgewindeflanken sich aus einem äußeren Teilflankenbereich des Vorgewindeprofils und einem inneren Teilflankenbereich des Gewindeformprofils darstellt oder zusammensetzt und/oder
b2) wenigstens eine von dessen Endgewindeflanken sich aus einem äußeren Teilflankenbereich des Gewindeformprofils und einem inneren Teilflankenbereich des Vorgewindeprofils darstellt oder zusammensetzt.

9. Verfahren nach einem der vorhergehenden Ansprüche, bei dem die Vorgewindeflanken des Vorgewindeprofils und die Flanken des Gewindeformprofils den gleichen Öffnungswinkel zueinander einschließen.

10. Verfahren nach einem der vorhergehenden Ansprüche, bei dem eine Vorrichtung zur Erzeugung von Gewinden in Werkstücken verwendet wird, umfassend
a) wenigstens einen Vorgewindeerzeugungsbereich zum spanabhebenden Erzeugen eines Vorgewindes dessen Vorgewindeprofil (1) zwei Vorgewindeflanken (1A, 1B) und einen die beiden Vorgewindeflanken verbindenden Vorgewindegrund (1C) aufweist,
und
b) wenigstens einen Gewindeformbereich zum Nachformen des Vorgewindes durch plastisches Eindrücken des Materials des Werkstücks wenigstens in einem Teilbereich der Vorgewindeflanken um ein vorgegebenes oder vorgebbares Eindrückvolumen.

11. Verfahren nach Anspruch 10, bei dem der oder die Vorgewindeerzeugungsbereich(e) und der bzw. die Gewindeformbereich(e) jeweils an einem zugehörigen Werkzeug ausgebildet sind.

12. Verfahren nach Anspruch 10, bei dem der oder die Vorgewindeerzeugungsbereich(e) und der bzw. die Gewindeformbereich(e) an einem gemeinsamen kombinierten Werkzeug ausgebildet sind.

13. Verfahren nach einem der Ansprüche 10 bis 12, bei dem ein Gewindeformprofil des Gewindeformbereichs zwei Flanken und einen die beiden Flanken verbindenden Gewindegrundbereich aufweist und wenigstens Teilbereiche der Flanken des Gewindeformprofils größere Abmessungen oder einen größeren Abstand voneinander aufweisen als die Vorgewindeflanken oder als Flanken eines Gewindeschneidprofils des Vorgewindeerzeugungsbereichs.

14. Verfahren nach einem der Ansprüche 10 bis 13, wobei das Endgewinde sich aus dem vom Gewindeformbereich nachgeformten Vorgewinde ergibt.
